# EUROPEAN PATENT SPECIFICATION

(11) **EP 1 238 207 B1**
(45) Date of publication and mention of the grant of the patent: **04.06.2003**
(21) Application number: 00981186.0
(22) Date of filing: 08.12.2000
(51) Int. Cl.: F16H 1/10, F16H 1/08, E05F 15/10

(54) **TRANSMISSION**
GETRIEBE
TRANSMISSION

(30) Priority: 14.12.1999 DK 178799
(43) Date of publication of application: 11.09.2002
(73) Proprietor: VKR Holding A/S, 2860 Soeborg (DK)
(72) Inventor: SORENSEN, Jens, Jorren, DK-2300 Copenhagen S (DK)
(74) Representative: Olsen, Lau Lund (DK)
(86) International application number: DK0000683
(87) International publication number: WO01044683

(56) References cited:
- EP-A1- 0 725 201
- DE-A1- 4 128 257
- US-A- 3 813 958
- US-A- 4 226 136

## Description

The present invention relates to a transmission with an input shaft for driving an output shaft.

Such a transmission is known to be used in many ways, e.g. to open a roof window where a motor drives the input shaft and where the output shaft drives the opening device of the window. When the window has been displaced to an open position, it may, however, sometimes close under the influence of its own weight as the motor is rotated via the transmission.

The object of the invention is to provide a simple transmission of the kind stated above, where a rotation of the output shaft without the input shaft simultaneously being driven by the driving mechanism entails a braking of the transmission.

With this end in view, the invention is characterized in that by a radial displacement, a brake disc can abut at its periphery on a braking surface, that the input shaft can subject the brake disc to a torque about the axis of rotation of the brake disc, and that the output shaft is drivingly connected to a brake gear wheel which has a smaller diameter than the brake disc and which is fixed coaxially to said disc.

If the output shaft is rotated without the input shaft being driven by the motor, it will tend to rotate the brake gear wheel which can thus together with the brake disc be radially displaced until the brake disc abuts on the braking surface and thus brakes the rotation of the output shaft. If, on the other hand, the input shaft is rotated by the motor, the brake disc is subjected to a torque about its axis of rotation such that it may rotate together with the brake gear wheel which may thus drive the output shaft.

In an advantageous embodiment, a supplementary driving connection with a backlash is provided between the input shaft and the output shaft, a backlash is provided in the driving connection between the input shaft and the brake disc, and a backlash is provided in the driving connection between the output shaft and the brake gear wheel. Because of the backlashes in the driving connection between the input and output shaft and between the input shaft and the brake disc, the brake disc can, at an extraneous rotational influence of the output shaft, brake in time as a consequence of the influence of the brake gear wheel, before it is influenced by a torque transferred from the output shaft via the input shaft to the break disc. When the motor drives the input shaft, the load transmission to the output shaft can be effected via the supplementary driving connection, and the output shaft can rotate synchronously with the brake gear wheel without affecting it, such that the brake disc is not displaced radially to braking as a consequence of the rotation of the output shaft. Since not even a torque transmission is effected between the brake gear wheel and the output shaft, the brake disc will substantially only be affected by a pure torque, and the friction between the brake disc and the brake surface is consequently minimal which provides a better efficiency of the transmission.

In an embodiment, the brake disc and the brake gear wheel are fastened near to each other on a brake shaft, which at a distance from these is journalled in a bearing, and the input shaft can drive the brake shaft by means of a gear wheel arranged on the brake shaft near to the bearing. As the brake gear wheel and brake disc are positioned on the brake shaft at a distance from the bearing of the latter, there is a possibility of a certain transverse displacement as a consequence of a deflection of the shaft and/or tilting hereof in the bearing. When the brake shaft is driven via the gear wheel placed near the bearing, the brake disc is affected substantially by a torque, as the bearing receives the transverse forces by which the gear wheel is affected.

It may be advantageous if a counterweight is fixed on the brake shaft near the bearing. The counterweight can stabilise the tilting of the brake shaft in its bearing, a brake function being obtainable which is more independent of the influence of the gravitation and thus of the orientation of the transmission in space.

Furthermore, it can be an advantage if the proportion between the diameter of the brake disc and the pitch diameter of the brake gear wheel is at least 2, and preferably at least 4, and further preferably at least 6. Thus, the point of application of the load effect from the output shaft on the brake gear wheel will be suitably close to the brake shaft in relation to the circumference of the brake disc such that the shaft will be affected by an appropriately small torque and a suitably large transverse force such that a good braking effect is obtained.

The operational pressure angle of the brake gear wheel can be larger than 40°, and can preferably be 55°-70°. Compared to an ordinary gear wheel with a pressure angle of 20°, it is thus obtained that at the braking, the brake shaft can be influenced by a larger transverse force, by which a better braking effect can be obtained.

The brake gear wheel can have inclined teeth, and the teeth can preferably be inclined at an angle of 20°-40°, whereby a more even engagement is obtained and thus a more even braking. Likewise, the brake gear wheel can advantageously be a herringbone gear wheel.

In an embodiment, around the brake disc, several stationary braking surfaces are distributed with limited extent in the circumferential direction of the brake disc. In this way, a suitable braking effect can be obtained, and at the same time, the possibility of an unintentional braking, e.g. as a consequence of vibrations of the brake disc, can be minimized. There can be three or more braking surfaces which are distributed at irregular intervals in the circumferential direction of the brake disc. An uneven distribution of the braking surfaces along the circumference can reduce a possible friction due to resonance at vibrations of the brake disc.

In an embodiment particularly simple as to production, the backlashes are provided by means of gear wheels which are engaged with backlashes.

In a further embodiment simple as to production, each individual backlash has the same dimension.

In the following, the invention will be explained in more detail by means of examples of embodiments with reference to the schematic drawing, in which
Fig. 1 shows a spatial view of an embodiment of the transmission according to the invention,
Fig. 2 shows the transmission in Fig. 1, however, not showing the housing,
Fig. 3 shows the brake disc with surrounding braking surfaces, seen in the direction of the axis,
Fig. 4 is a draft of the load transmission between the brake gear wheel and the gear wheel by which it is actuated, seen in the direction of the axis,
Fig. 5 is a spatial view partly in section of a second embodiment of the transmission according to the invention,
Fig. 6 is an exploded view of the embodiment shown in fig. 5,
Fig. 7 shows the transmission in fig. 5 seen from another angle partly in section,
Fig. 8 shows the transmission in Fig. 5 in a spatial view, and
Fig. 9 is a spatial view of a third embodiment of the transmission according to the invention.

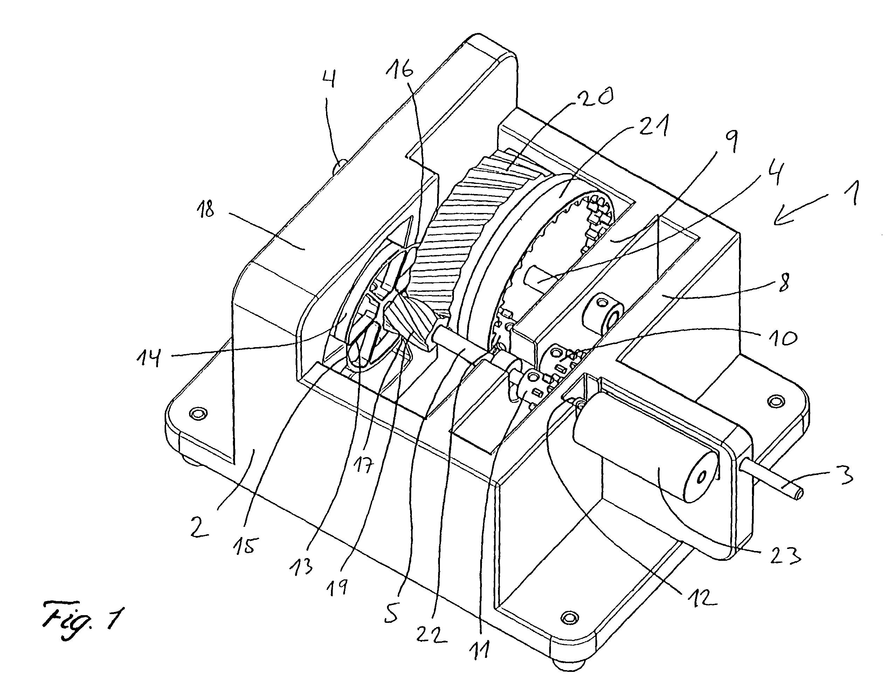

Fig. 1 shows a transmission 1 according to the invention with a housing 2 in which an input shaft 3, an output shaft 4 and a brake shaft 5 are journalled in parallel. The input shaft 3 can be connected to a driving device, such as an electric motor, and the output shaft 4 can drive a device, such as the opening mechanism of a window. The invention can, however, be used for many other purposes where there is need for a transmission which blocks rotation of the output shaft in both rotating directions when the input shaft stands still. In the shown model, the three shafts 3, 4, 5 are horizontal, and the transmission will be described in this position, but it may be used in an arbitrary orientation in space.

The input shaft 3 is journalled in two places, i.e. in a vertical end wall 8 of the housing 2 and in an internal dividing wall 9 parallel to said end wall such that the shaft can only be moved by rotation about its axis of rotation. Between the dividing walls 8, 9, a gear wheel 10 is arranged on the input shaft 3 and is with backlash in engagement with a gear wheel 11 mounted on the brake shaft 5 immediately at the end wall 8 in which the brake shaft is journalled in a bearing 12 such that it can rotate about its longitudinal axis and tilt around any axis which is perpendicular to the longitudinal axis and extends through the bearing 12.

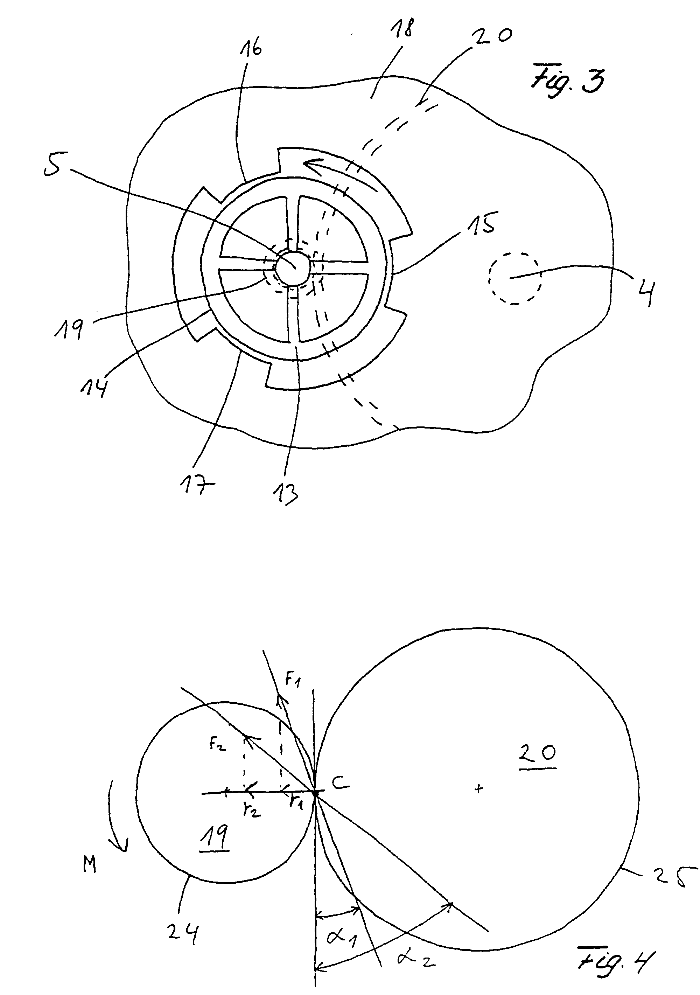

The brake shaft 5 is only journalled in the bearing 12, and on its opposite end situated within the housing 2, a brake disc 13 with an outer cylinder surface 14 is mounted. Around this cylinder surface 14 in a second vertical end wall 18 of the housing placed opposite the end wall 8, three stationary brake surfaces 15, 16, 17 are provided, each forming a part of a cylinder surface with a slightly larger diameter than the cylinder surface 14 on the brake disc 13, cf. Fig. 3. Immediately next to the brake disc 13 on the brake shaft 5, a brake gear wheel 19 is mounted and is with backlash in engagement with a larger gear wheel 20 arranged on the output shaft 4.

The output shaft 4 is journalled rotatably in the end wall 18 and extends through this to connect with the device driven by the transmission, and it is further journalled at its other end in the dividing wall 9. The gear wheel 20, which has an outer toothing, is positioned on the output shaft 4 between the end wall 18 and the dividing wall 9, and integrally with the gear wheel 20, there is provided an inner toothed gear wheel 21 which in the shown embodiment has approximately the same pitch diameter as the wheel 20 and which is with backlash in engagement with a small gear wheel 22 mounted on the end of the input shaft 3 positioned in the housing 2.

If the input shaft 3 is rotated by the driving device, transverse forces on the brake shaft 5 resulting from the load transmission from the gear wheel 10 to the gear wheel 11 will practically be received almost completely in the bearing 12, since the gear wheel 11 is mounted approximately at the same place on the brake shaft as the bearing 12, and the remaining part of the brake shaft 5 placed in the housing and thus the brake disc 13 will hereby substantially be influenced by a pure torque. Therefore, the brake shaft 5 will in general not tilt in the bearing 12 and the brake disc 13 will rotate without entering into braking abutment on the brake surfaces 15, 16, 17. Furthermore, a counterweight 23 mounted on the brake shaft 5 immediately at the outside of the end wall 8 can outbalance the brake shaft such that the braking effect is made less dependent on the orientation of the transmission in space. The counterweight 23 can moreover minimize a friction which at normal operation of the transmission can occur between the brake disc 13 and a brake surface as a consequence of the proper weight of the brake disc.

When rotated, the input shaft 3 further drives the output shaft 4 with a backlash by means of the gear wheel 22 in engagement with the gear wheel 21, and the output shaft 4 rotates therefore synchronously with the brake shaft 5. The said backlashes between the engaging gear wheels 10, 11, 19, 20, 21, 22 correspond in the shown embodiment all to the same angle change, but the backlashes can be varied according to the multiplication between the different gear wheels. By the said rotation of the input shaft, the gear wheel 20 transfers no forces to the brake gear wheel 19 as the teeth on the gear wheels 19, 20 do not touch each other. The backlashes can advantageously in a given case be formed in such a way that rotation of the input shaft 3 in an arbitrary direction of rotation starting from a neutral position will result in that the gear wheels 10, 22 have compensated their respective backlashes at the same time. The same applies for rotation of the output shaft 4 starting from a neutral position such that the gear wheels 20, 21 here compensate their respective backlashes at the same time, and for rotation of the brake shaft 5 starting from a neutral position such that the gear wheel 11 and the brake gear wheel 19 here compensate their respective backlashes at the same time.

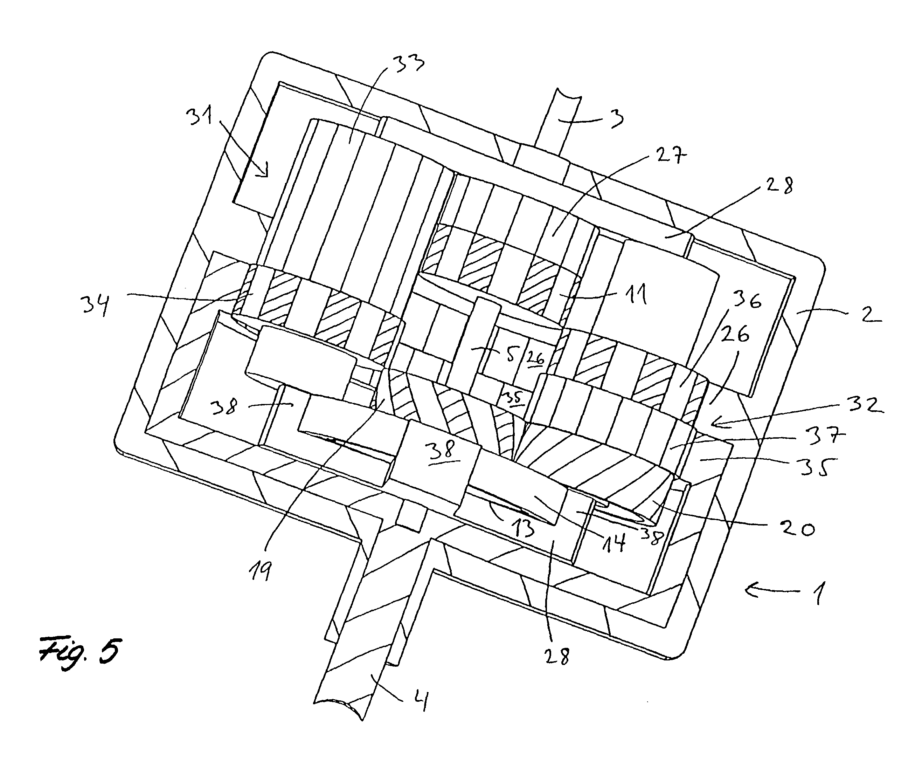

On the other hand, when the output shaft 4 is rotated due to a load by the driven device without the input shaft 3 being moved by the driving device, the teeth on the gear wheel 20 will abut on the teeth on the gear wheel 19, and this will in the point of engagement C be influenced by a load F, the direction and dimension of which depend on the angle of engagement α, cf. Fig. 4, where the circles 24, 25 indicate the operating pitch circles for the brake gear wheel 19 and the gear wheel 20, respectively. The load F affects in any case the brake gear wheel 19 and thus the brake disc 13 in transverse direction in relation to the brake shaft 5, and this will thus tilt in the bearing 12 such that the cylinder surface 14 on the brake disc 13 abuts on one or two of the brake surfaces 15, 16, 17 whereby the rotation of the brake disc 13 and thus of the output shaft 4 is braked. The backlash which is in the driving connection from the output shaft 4 via the input shaft 3 to the brake shaft 5 is sufficiently large for the brake shaft 5 not to be affected at braking by a torque by this route, and it is therefore only the load F shown in Fig. 4 which participates at the braking.

In addition to trying to press the brake disc 13 in a radial direction, the load F results in a torque M on the disc 13 about the brake shaft 5 as it attacks in the point C at a distance from the axis of rotation of the shaft 5. The best braking effect is obtained with a small torque M and a large radial force since the torque M seeks to turn the brake disc 13 and thus counteracts the braking. The brake gear wheel 19 should therefore have a relatively small diameter as with the same load F, a smaller torque M can be obtained by less distance between the point of attack C and the axis of rotation of the brake shaft. Furthermore, the angle of engagement α should be relatively large as a large radial force r is thus obtained. In Fig. 4, α₁ corresponds to an angle of engagement of 20°, and α₂ to 50°.

Furthermore, the best braking effect is obtained when the brake disc 13 has a large diameter in relation to the pitch diameter of the brake gear wheel 19, in particular, a good effect is obtained with a proportion of more than 2. For a given transverse force on the brake disc, a larger torque is required to rotate the disc, the larger diameter this has. The frictional force between the cylinder surface 14 on the brake disc 13 and the brake surfaces 15, 16, 17 due to the transverse force is in fact acting tangentially on the brake disc, and the larger the diameter is, the larger a brake moment occurs consequently.

In Fig. 4 the brake surfaces 15, 16, 17 are orientated such around the brake disc 13 that the surface 15 is placed at the connecting line between the output shaft 4 and the brake shaft 5, and the other two surfaces 16, 17 are distributed in this relation in the circumferential direction. However, other positions of the brake surfaces are also possible as it e.g. appears from Fig. 1. In particular, the brake surfaces can be distributed with irregular spaces in the circumferential direction of the brake disc.

The shown gear wheels 10, 11 on the input shaft 3 and on the brake shaft 5, respectively, are as stated in mutual engagement with backlash. The backlash is in a simple way obtained by removal of every other tooth on the gear wheels, whereby a backlash of one module is obtained. However, this reduces the contact ratio, and in small gear wheels where the contact ratio is already small, the gear wheels might get out of engagement. In order to assure the engagement, each gear wheel 10, 11 is therefore composed of two standard gear wheels where every other tooth is removed, the two standard gear wheels being mounted on the shaft rotated by exactly one module in relation to each other. Between the gear wheel 22 on the input shaft and the gear wheel 21 on the output shaft, the backlash is obtained in the same way, only is the gear wheel 21 internally toothed, whereby the contact ratio is further increased. The backlashes can also be obtained in other ways, e.g. the driving connection between the input shaft 3 and the brake shaft 5 could be provided with standard gear wheels without backlash as the gear wheel 11 could be mounted on the brake shaft 5 rotatably in relation to the latter between two stops. Furthermore, backlashes can be obtained by separating the shafts on appropriate places and connect these shaft parts by means of couplings with backlashes.

Between the gear wheel 20 on the output shaft 4 and the brake gear wheel 19 on the brake shaft 5, the backlash is obtained by producing the gear wheels with particularly large distance between the teeth. The gear wheels are moreover produced with inclined teeth, whereby a more quiet braking can be obtained as there is substantially all the time the same distance from the point of engagement C to the brake shaft 5 and the output shaft 4, respectively.

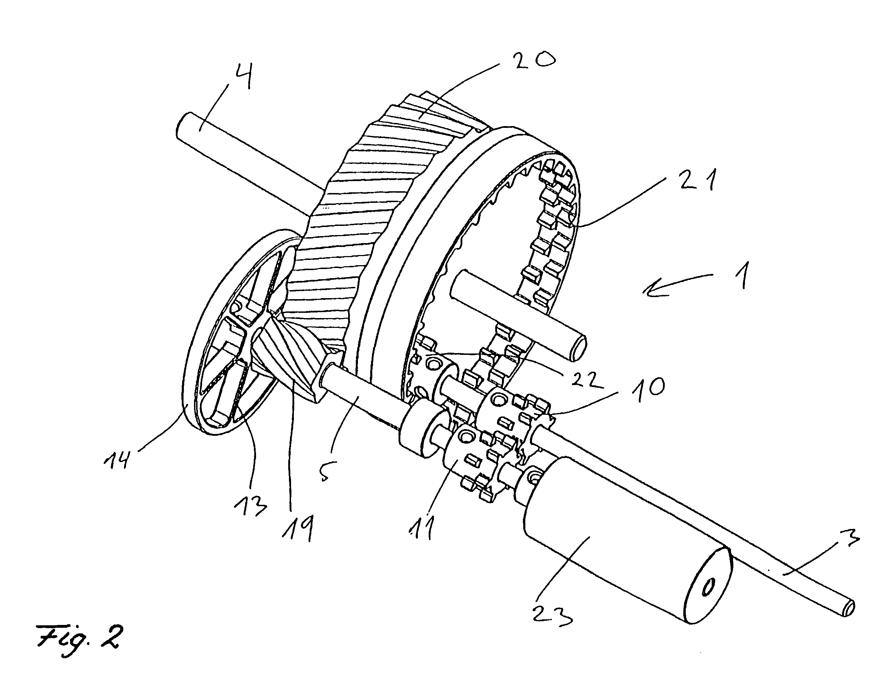

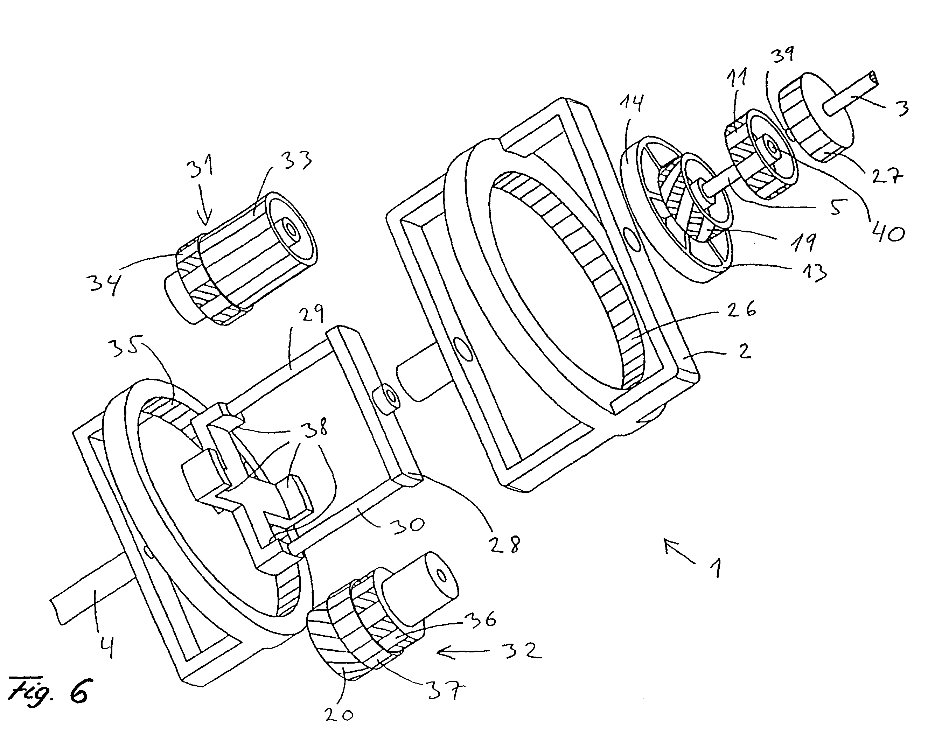

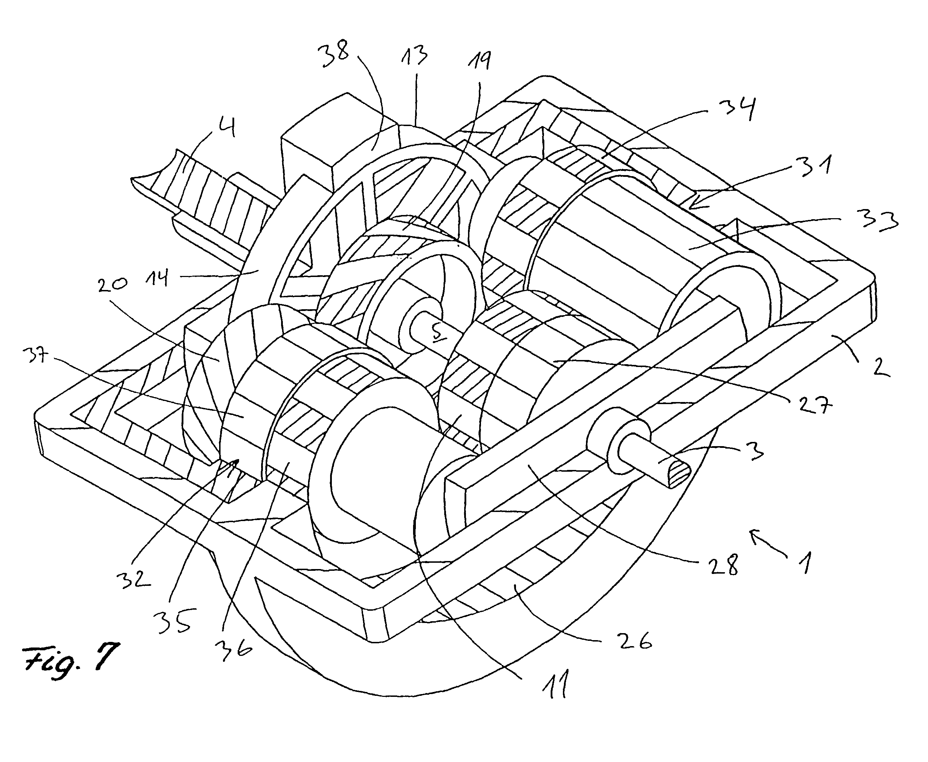

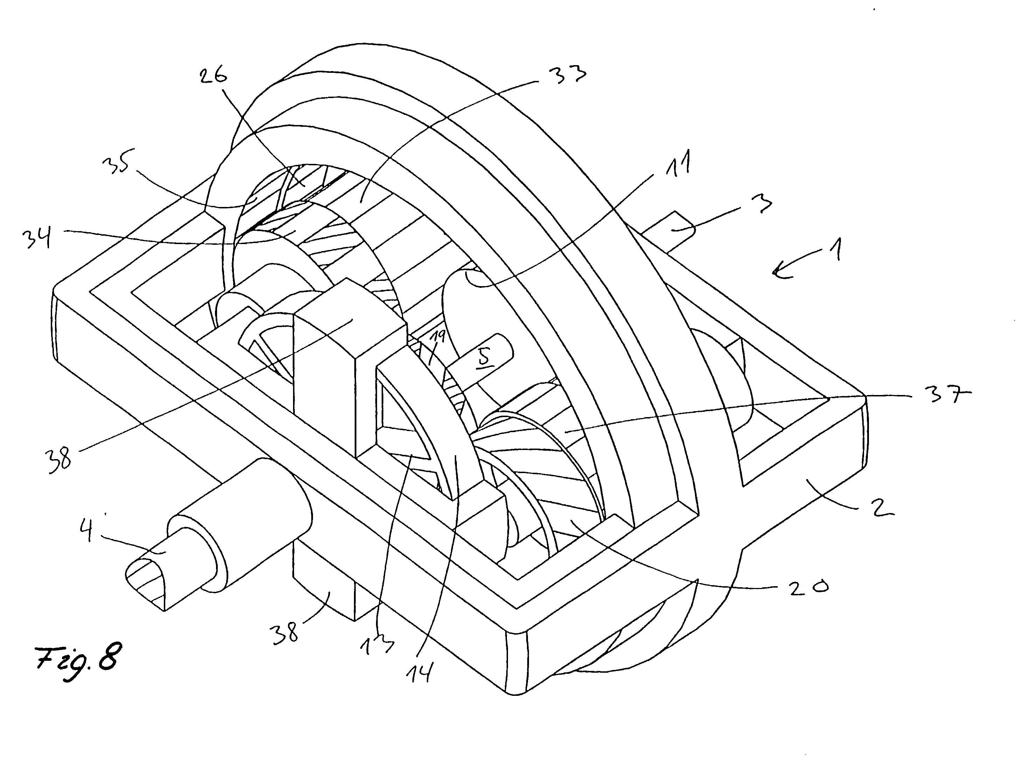

Figs. 5 to 8 show schematically a second embodiment of the transmission according to the invention where this is designed as a variation of a planet gear of the Wolfrom type. Elements corresponding to elements of the embodiment shown in Figs. 1 and 2 are preferably given the same referential numbers. The teeth of the gear wheels are only shown in a simplified manner as they are indicated with lines, and gear wheels which enter into engagement with another gear wheel with backlash are illustrated with hatched fields.

The planet gear comprises a stationary frame 2 which carries an also stationary inner toothed primary ring gear 26. An input shaft 3 is journalled rotatably in the frame 2 and coaxially in relation to the primary ring gear 26 and carries a sun gear 27 firmly connected with the shaft 3. A planet wheel support 28 is in the frame 2 rotatably journalled about the axis of the primary ring gear 26 and has a first and a second planet wheel shaft 29, 30 which are parallel to and symmetrically placed in relation to the axis of rotation of the support. On the first and second planet wheel shaft 29, 30, a first planet wheel 31 and a second planet wheel 32, respectively, are rotatably journalled.

The first planet wheel 31 has a first outer driven toothing 33, and a second outer driving toothing 34. The driven toothing 33 is in engagement with the sun gear 27 on the input shaft 3 and further with the primary ring gear 26, and the driving toothing 34 is in engagement with backlash with a secondary inner toothed ring gear 35 which in the frame 2 is journalled rotatably and coaxially in relation to the primary ring gear 26 and is fixedly connected with a coaxial output shaft 4.

The second planet gear 32 has a first outer toothing 36 which is in engagement with backlash with the primary ring gear 26, and a second outer toothing 37 which is in engagement with the secondary ring gear 35, together with a third outer toothing 20 which is in engagement with backlash with a brake gear wheel 19 which is firmly mounted on a brake shaft 5 which is journalled rotatably and coaxially with the ring gears 26, 35.

Next to the brake gear wheel 19, a brake disc 13 is mounted on the brake shaft 5 and its outer cylinder surface 14 can by radial displacement of the disc 13 abut on one or two of four brake blocks 38 which are produced integrally with the planet wheel support 28. Instead, the brake blocks 38 may by an appropriate modification of the planet wheel support 28 also be firmly connected with the ring gear 35 or form a part of or be mounted on the frame 2. On the opposite end of the brake shaft 5, a gear wheel 11 is mounted and is with clearance in engagement with the driven toothing 33 of the planet wheel 31. The brake shaft 5 extends from the input shaft 3, and is rotatably journalled in relation hereto as a pin 39 on the end of the input shaft 3 is in engagement with a hole 40 in the end of the brake shaft 5 situated opposite the brake disc 13. The brake shaft 5 can thus not be transversely displaced at the gear wheel 11, and when this is driven by the toothing 33, the brake shaft 5 and thus the brake disc 13 are therefore affected by a substantially pure torque.

When turning the input shaft 3, the planet wheel 31 is rotated, as its toothing 33 is driven by the sun gear 27. The planet wheel support 28 is thus rotated because the toothing 33 rolls on the stationary ring gear 26. Since the multiplication between the toothing 33 and primary ring gear 26 is different from the multiplication between the toothing 34 and the secondary ring gear 35, the secondary ring gear 35 is rotated in relation to the frame 2 as a consequence of the rotation of the toothing 34, and thus the output shaft 4 is driven. By this rotation, the planet wheel 32 follows as the toothing 36 has the same number of teeth as the toothing 33, and the toothing 37 has the same number of teeth as the toothing 34. The backlash between the toothing 34 and the ring gear 35 and the backlash between the toothing 36 and the ring gear 26 act in this respect in parallel and correspond thus both to the backlash between the input shaft 3 and the output shaft 4 in the embodiment shown in Figs. 1 and 2, i.e. the backlash between the gear wheels 21, 22. As a consequence of the rotation of the input shaft 3, the brake shaft 5 is rotated with backlash as the toothing 33 is in engagement with the gear wheel 11. The mutual gearing of the gear wheels is, however, adjusted such that the toothing 20 and the brake gear wheel 19 will rotate synchronously without any load being transferred between them. The brake disc 13 will therefore not be displaced radially for braking against the brake blocks 38.

When turning the output shaft 4 without simultaneous rotation of the input shaft 3, the ring gear 35 is rotated and thus rotates the toothing 37 without backlash. The toothing 20 rotates with the toothing 37 and thus rotates the brake gear wheel 19 with backlash whereby the brake disc is displaced radially for abutment on one or two brake blocks 38 and the rotation of the output shaft is thus braked. By the said rotation of the output shaft 4, the planet wheel support 28 is also rotated via a backlash in the form of the two above backlashes acting in parallel. However, this rotation does not affect the brake shaft via the planet wheel 31 as there is also a backlash between its toothing 33 and the gear wheel 11 on the brake shaft 5, and the brake disc is therefore not affected by a torque before it is braked as a consequence of the stated radial displacement.

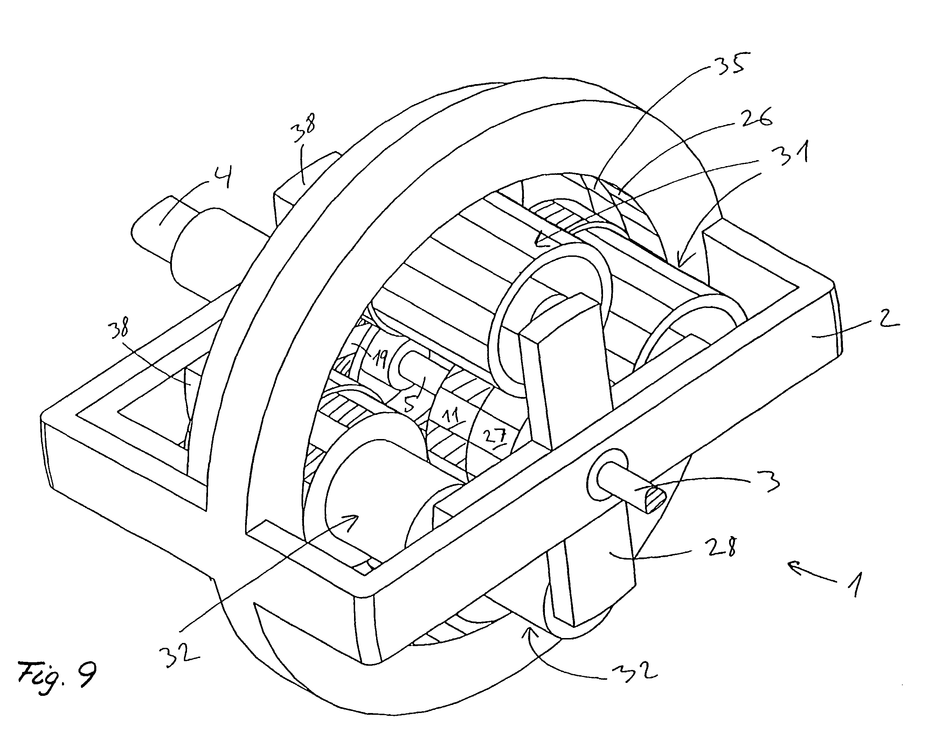

In Fig. 9, a third embodiment of the invention is shown. This embodiment corresponds to the planet gear shown in Figs. 5 to 8 as there are here four planet wheels instead of two. These four planet wheels correspond two by two to the planet wheels 31 and 32, respectively, shown in Fig. 5. It would also be possible to produce a gear with even more planet wheels according to the same principle.

The brake disc 13 may be journalled in a transversely displaceable manner otherwise than described earlier, e.g. the brake shaft 5 may be journalled in a parallel displaceable manner and spring loaded in its bearings against a position where the brake disc 13 is not in engagement with the brake surfaces 15, 16, 17. The input shaft 3 may then affect the brake shaft with a pure torque through a coupling which cannot receive transverse loads such as a flexible shaft coupling. Furthermore, the same stabilizing brake effect as by a counterweight 23 is thus obtained.

Obviously, the transmission according to the invention can be produced with an arbitrary multiplication between the input shaft and the output shaft, and that the said connections with backlash between the shafts can all be designed in various ways, with couplings or with gear wheels with or without helical toothing, with inner or outer toothings, with more intermediate gears of different known kinds, etc. The transmission in Figs. 1 and 2 is shown with parallel shafts which can be an advantage in the production, however, one or more of the shafts may also be perpendicular to the others.

## Claims

1. A transmission (1) with an input shaft (3) for driving an output shaft (4), **characterized in that** by a radial displacement, a brake disc (13) can abut at its periphery (14) on a braking surface (15, 16, 17), that the input shaft (3) can subject the brake disc (13) to a torque about the axis of rotation of the brake disc, and that the output shaft (4) is drivingly connected to a brake gear wheel (19) which has a smaller diameter than the brake disc (13) and which is fixed coaxially to said disc (13).

2. A transmission (1) according to claim 1, **characterized in that** a supplementary driving connection (21, 22) with a backlash is provided between the input shaft (3) and the output shaft (4), that a backlash is provided in the driving connection between the input shaft (3) and the brake disc (13), and that a backlash is provided in the driving connection between the output shaft (4) and the brake gear wheel (19).

3. A transmission (1) according to claim 1 or 2, **characterized in that** the brake disc (13) and the brake gear wheel (19) are fastened near to each other on a brake shaft (5), which at a distance from these is journalled in a bearing (12, 39, 40), and that the input shaft (3) can drive the brake shaft (5) by means of a gear wheel (11) arranged on the brake shaft (5) near to the bearing (12, 39, 40).

4. A transmission (1) according to any of the preceding claims, **characterized in that** a counterweight (23) is fixed on the brake shaft (5) near the bearing (12).

5. A transmission (1) according to any of the preceding claims, **characterized in that** the proportion between the diameter of the brake disc (13) and the pitch diameter of the brake gear wheel (19) is at least 2, and preferably at least 4, and further preferably at least 6.

6. A transmission (1) according to any of the preceding claims, **characterized in that** the operational pressure angle of the brake gear wheel (19) is larger than 40°, and preferably is 55°-70°.

7. A transmission (1) according to any of the preceding claims, **characterized in that** the brake gear wheel (19) has inclined teeth, and that the teeth are preferably inclined at an angle of 20°-40°.

8. A transmission (1) according to any of the preceding claims, **characterized in that** around the brake disc (13), several stationary braking surfaces (15, 16, 17) are distributed with limited extent in the circumferential direction of the brake disc (13), and that there are preferably three or more braking surfaces (15, 16, 17) which are distributed at irregular intervals in the circumferential direction of the brake disc (13).

9. A transmission (1) according to any of the preceding claims, **characterized in that** the backlashes are provided by means of gear wheels (10, 11, 19, 20, 21, 22) which are engaged with backlashes.

10. A transmission (1) according to any of the preceding claims, **characterized in that** each individual backlash has the same dimension.

## Patentansprüche

1. Transmission (1) mit einer Eingangswelle (3) zum Antrieb einer Ausgangswelle (4), **dadurch gekennzeichnet, dass** eine Bremsscheibe (13) durch radiale Versetzung bei deren Peripherie (14) an einer Bremsfläche (15, 16, 17) anliegen kann, dass die Eingangswelle (3) die Bremsscheibe (13) mit einem Moment um deren Drehachse beeinflussen kann, und dass die Ausgangswelle (4) mit einem Bremszahnrad (19), das einen kleineren Durchmesser als die Bremsscheibe (13) aufweist und an die Scheibe (13) koaxial befestigt ist, in Antriebsverbindung steht.

2. Transmission (1) nach Anspruch 1, **dadurch gekennzeichnet, dass** zwischen der Eingangswelle (3) und der Ausgangswelle (4) eine zusätzliche Antriebsverbindung (21, 22) mit einem Spielraum vorgesehen ist, dass in der Antriebsverbindung zwischen der Eingangswelle (3) und der Bremsscheibe (13) ein Spielraum vorgesehen ist, und dass in der Antriebsverbindung zwischen der Ausgangswelle (4) und dem Bremszahnrad (19) ein Spielraum vorgesehen ist.

3. Transmission (1) nach Anspruch 1 oder 2, **dadurch gekennzeichnet, dass** die Bremsscheibe (13) und das Bremszahnrad (19) auf einer Bremswelle (5) nahe aneinander befestigt sind, welche Bremswelle in einem Abstand von diesen in einem Lager (12, 39, 40) gelagert ist, und dass die Eingangswelle (3) die Bremswelle (5) mittels eines auf der Bremswelle (5) nahe dem Lager (12, 39, 40) angeordneten Zahnrades (11) treiben kann.

4. Transmission (1) nach einem der vorhergehenden Ansprüche, **dadurch gekennzeichnet, dass** auf der Bremswelle (5) in der Nähe des Lagers (12) ein Gegengewicht (23) befestigt ist.

5. Transmission (1) nach einem der vorhergehenden Ansprüche, **dadurch gekennzeichnet, dass** das Verhältnis zwischen dem Durchmesser der Bremsscheibe (13) und dem Flankendurchmesser des Bremszahnrades (19) mindestens 2, vorzugsweise mindestens 4, und noch mehr bevorzugt mindestens 6 ist.

6. Transmission (1) nach einem der vorhergehenden Ansprüche, **dadurch gekennzeichnet, dass** der Betriebseingriffswinkel des Bremszahnrades (19) grösser als 40°, und vorzugsweise 55°-70° ist.

7. Transmission (1) nach einem der vorhergehenden Ansprüche, **dadurch gekennzeichnet, dass** das Bremszahnrad (19) schräge Zähne aufweist, und dass die Zähne vorzugsweise in einem Winkel von 20°-40° schräggestellt sind.

8. Transmission (1) nach einem der vorhergehenden Ansprüche, **dadurch gekennzeichnet, dass** rund um die Bremsscheibe (13) mehrere stationäre Bremsflächen (15, 16, 17) mit begrenzter Ausdehnung in der Umkreisrichtung der Bremsscheibe (13) verteilt sind, und dass vorzugsweise drei oder mehrere in unregelmässigen Intervallen in der Umkreisrichtung der Bremsscheibe (13) verteilte Bremsflächen (15, 16, 17) vorgesehen sind.

9. Transmission (1) nach einem der vorhergehenden Ansprüche, **dadurch gekennzeichnet, dass** die Spielräume durch mit Spielräumen eingreifende Zahnräder (10, 11, 19, 20, 21, 22) zustande kommen.

10. Transmission (1) nach einem der vorhergehenden Ansprüche, **dadurch gekennzeichnet, dass** jeder einzelne Spielraum dieselbe Grösse aufweist.

## Revendications

1. Transmission (1) avec un arbre d'entrée (3) à entraîner un arbre de sortie (4), **caractérisée en ce que** par un déplacement radial, un disque de frein (13) peut s'appuyer à sa périphérie (14) sur une surface de frein (15, 16, 17) , **en ce que** l'arbre d'entrée (3) peut exposer le disque de frein (13) à un moment autour de l'axe de rotation du disque de frein, et **en ce que** l'arbre de sortie (4) est en liaison d'entraînement avec une roue dentée de frein (19) présentant un diamètre plus petit que le disque de frein (13) et étant fixée coaxialement audit disque (13).

2. Transmission (1) selon la revendication 1, **caractérisée en ce qu'**une liaison d'entraînement supplémentaire (21, 22) avec un jeu est pourvue entre l'arbre d'entrée (3) et l'arbre de sortie (4), **en ce qu'**un jeu est pourvu dans la liaison d'entraînement entre l'arbre d'entrée (3) et le disque de frein (13), et **en ce qu'**un jeu est pourvu dans la liaison d'entraînement entre l'arbre de sortie (4) et la roue dentée de frein (19).

3. Transmission (1) selon la revendication 1 ou 2, **caractérisée en ce que** le disque de frein (13) et la roue dentée de frein (19) sont fixés l'un près de l'autre sur un arbre de frein (5) qui, à une distance de ceux-ci, est logé dans un palier (12, 39, 40), et **en ce que** l'arbre d'entrée (3) peut entraîner l'arbre de frein (5) au moyen d'une roue dentée (11) arrangée sur l'arbre de frein (5) près du palier (12, 39, 40).

4. Transmission (1) selon l'une quelconque des revendications précédentes, **caractérisée en ce qu'**un contrepoids (23) est fixé sur l'arbre de frein (5) près du palier (12).

5. Transmission (1) selon l'une quelconque des revendications précédentes, **caractérisée en ce que** la proportion entre le diamètre du disque de frein (13) et le diamètre primitif de la roue dentée de frein (19) est au moins 2, et préférablement au moins 4, et ultérieurement préférablement au moins 6.

6. Transmission (1) selon l'une quelconque des revendications précédentes, **caractérisée en ce que** l'angle d'engrènement fonctionnel de la roue dentée de frein (19) est plus grand que 40°, et préférablement est 55°-70°.

7. Transmission (1) selon l'une quelconque des revendications précédentes, **caractérisée en ce que** la roue dentée de frein (19) présente des dents inclinées, et **en ce que** les dents sont préférablement inclinées d'un angle de 20°-40°.

8. Transmission (1) selon l'une quelconque des revendications précédentes, **caractérisée en ce qu'**autour du disque de frein (13), plusieurs surfaces de frein stationnaires (15, 16, 17) avec une étendue limitée sont espacées dans la direction circonférentielle du disque de frein (13), et **en ce qu'**il y a préférablement trois ou plusieurs surfaces de frein (15, 16, 17) qui sont irrégulièrement espacées dans la direction circonférentielle du disque de frein.

9. Transmission (1) selon l'une quelconque des revendications précédentes, **caractérisée en ce que** les jeux sont pourvus au moyen des roues dentées (10, 11, 19, 20, 21, 22) qui s'engrènent l'une avec l'autre présentant des jeux.

10. Transmission (1) selon l'une quelconque des revendications précédentes, **caractérisée en ce que** chaque jeu présente les mêmes dimensions.
